# EUROPEAN PATENT APPLICATION

(11) **EP 3 322 131 A1**
(43) Date of publication of application: **16.05.2018**
(21) Application number: 17198260.6
(22) Date of filing: 25.10.2017
(51) Int. Cl.: H04L 12/28, H04L 29/06

(54) **CENTRAL SWITCH DEVICE**

(30) Priority: 15.11.2016 SE 1651493
(71) Applicant: Senecta Security AB, 114 42 Stockholm (SE)
(72) Inventor: JOHANSSON, Daniel, SE-114 42 Stockholm (SE)
(74) Representative: Brann AB

(57) **Abstract**

A central switch device (10) adapted to connect in-house IT-related equipment to an external network, which central switch device (10) comprises a closable housing (11) having a connection module (12) provided therein, to which connection module (12) connecting units (13) can be plugged into and mounted adjacent to each other vertically and/or horizontally and are provided to receive power and adapted to communicate with the connection module panel (12), as well as the IT-related equipment (13a) such as internet-of-things devices, IOT, devices , which central switch device (10) further comprises an external network switch device (13a) adapted to control and communicate with at least one external network (13b) on a first communication port (13c) for external primary communication, wherein the central switch device (10) further comprises a back-up communication (14) for back-up communication, an encryption module (15) configured for encrypting data from the communication ports (13a, 13b); a mechanical locking device (16) for locking or unlocking the housing (11) to deny unauthorized or permit authorized access to the IT-related equipment (13a), and a power back-up unit (17).

## Description

### TECHNICAL FIELD

The invention described herein relates to a central switch device, in particular a central switch device for a secure internet environment for networked in-house devices.

### BACKGROUND

Most of the Internet connections including equipment such as switches at user premises are sensitive for data intrusion since they often lack an efficient and updated protection against external intrusion, both data intrusion as well as physical intrusion. Since presently, and in the future, more and more features and modules are connected this sensitivity increases.

Also, if a user has invested in hardware and/or soft-ware for protection against data intrusion, often important features such as service, maintenance, and updating of soft-ware are lacking even if the users believe their Internet supplier or own IT-department provide these services for them. There is more or less always no or limited protection against physical intrusion at user premises, as computer server rooms or the like can easily be intruded at the user premises.

Also power failure at user premises often leads to severe re-starting of IT-systems and sometimes even information is lost.

A switch is a central device in a computer network that electrically and logically connects together other networked devices, typically networked devices of in-house environments at user premises. Multiple data cables are plugged into the switch to enable communication between different in-house networked devices and an external network. The central device manages the flow of data across the external network and in- house networked devices communicating via the switch. Each networked device connected to the switch can be identified using a specific address, such as a MAC address, allowing the switch to regulate the flow of traffic. Internet Of Things devices (IOT devices) are today also communicating with the switch, but are often connected side-to -side with existing reasonable well protected networked devices. But, because of the large number of IOT devices and hence large number of IOT connections, it is sometimes hard to protect one and every connection. The large number of IOT connections causes a large number of "security holes" providing a lot of intrudeable ways in an ever increasing number because of new IOT connections adding all the time. This solution is therefore not safe enough because of the large number of open security holes.

There are also problems with power failure since the IOT devices typically have no back-up powering. This implies a lot of problems in case of power failure since difficult restarts often have to be made, sometimes even leading to loss of information.

Hence, there is a need to overcome at least some of the drawbacks mentioned above, in particular as regards safety. Also, even if there are measures taken to increase safety such as providing safety hard-ware or safety soft-ware, typically these measures are not further serviced, maintained or updated often despite the user believing their service provider or internal IT department provides this, the problems still remain.

Communication to an external location via an external network also often occurs over a single communication link, which implies vulnerability against failure of this single communication link, for instance of essential functions such as alarm handling.

Another problem is that the coupling panels inside the switches are visible and have visible communication cables and IOT connections, which both easily can be removed by unauthorized persons, or by authorized persons due to mistake. Also this is a problem to be solved.

### SUMMARY

According to one aspect, it is an object to provide a central switch device of a user premises. The central switch device provides a secure internet environment for networked in-house devices.

Herein, the term "central", means a switch device provided to be centrally located in a user's premises.

Herein, the term "secure" means that one and every communication is protected against data intrusion.

Herein, the term "user premises" means that the switch is intended for use inside, or on a user's premises such as inside an office or the like.

Herein, the term "central switch device" can without any limitation be any of: a switch, or a user device such as coupling unit having a connection module into which connecting units can be plugged and/or mounted.

In one aspect there is provided a central switch device adapted to secure networked in-house devices, in particular networked in-house devices also in an internet-of-things environment (IOT environment). The central switch device comprisesa housing having a connection module being adapted to connect connecting units of networked in-house devices. Connecting units can be plugged into the connection module for instance by means of suitable cables or in any other suitable way and mounted adjacent to each other vertically and/or horizontally and are provided to receive power and adapted to communicate with the connection module. The connection module, being part of the central switch is also adapted to communicate with other IT-related equipment such as internet-of-things devices, IOT devices such that one and every communication is protected against data intrusion.

The central switch device further comprises an external network device adapted to control and communicate with at least one external network, typically on a first communication port, for external primary communication.

The central switch device further comprises a back-up communication for back-up communication with an external network. The back-up communication can be wired or wireless, typically wire-less and the network.

In this way communication to an external location can occur over a more than one communication link, which implies vulnerability against failure of essential functions such as alarm handling.

The central switch device further comprises an encryption module configured for encrypting received data, for instance from the external network on the first communication port for external primary communication. Also data transmitted from the central switch device may be encrypted.

In this way each and every communication can be protected against data intrusion. However, some part of the connection module may also provide one or more unencrypted connections, for instance 8 encrypted connections and 8 unencrypted connections.

The central switch device further comprises an electro-mechanical locking device for locking or unlocking the housing to deny unauthorized or permit authorized access to the IT-related equipment.

The electro-mechanical locking device may comprise means configured to detect tampering and/or unauthorized access. In this way, tampering and/or unauthorized access may be detected and traced. Questions like: By whom and when did intrusion take place? Can be investigate

The locking device may alternatively be a mechanical lock only. This provided a simple, unexpensive lock.

The central switch device further comprises a power back-up unit.

As disclosed above, a common advantage of certain embodiments described herein is that they provide a central switch device which is: safe, reliable, intelligent and user-friendly. This kind of central switch device has not been disclosed until now. A reason that such a central switch device has not been disclosed until now is that even if each feature separately may be known per se, but not the combination, since various skilled persons, skilled in the different features, are involved, but do not cooperate with each other.

Further advantages and features of embodiments of the present invention will become apparent when reading the following detailed description in conjunction with the drawings.

### BRIEF DESCRIPTION OF THE DRAWINGS

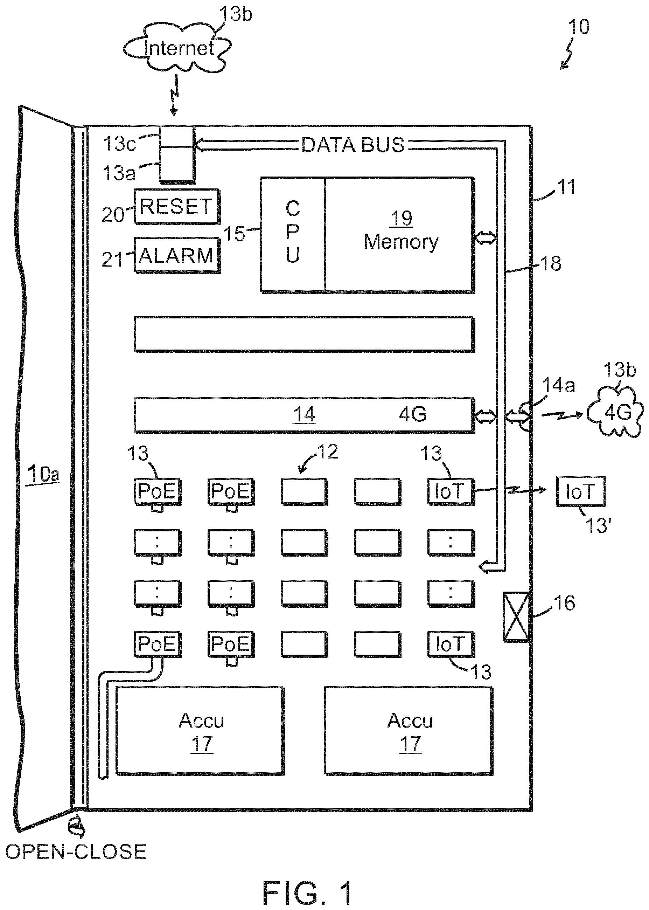

Fig. 1 is a front view of a central switch device according to an embodiment the present invention, which is adapted to be wall-mounted in-house in an office for instance; and

### DETAILED DESCRIPTION OF EMBODIMENTS

The present disclosure will now be described with reference to a central switch device according to an embodiment the present invention. The central switch device is adapted to secure networked in-house devices, in particular to networked in-house devices, and in particular with reference to IT-related equipment including an exemplary internet of things (IOT) environment. It will be understood that the exemplary IOT environment is provided to assist in an understanding of the present teaching and is not to be construed as limiting in fashion. Furthermore, modules or elements, which are described with reference to any one of Fig. 1 may be interchanged with other equivalent elements without departing from the spirit of the present teaching.

According to another embodiment of the present invention, the central switch device can be adapted to be mounted in a conventional 19" rack in-house in an office for instance. This embodiment is not illustrated.

Referring to Fig. 1, there is provided one embodiment of a central switch device 10 for an internet-of-things environment. Fig. 1 is a front view of the central switch device 10 according to an embodiment the present invention, which is adapted to be wall-mounted in-house in an office for instance. The central switch device provides a secure internet environment for networked in-house devices. The central switch device is provided to be centrally located in a user's premises.

The central switch device 10 is embodied as a central device that is secure having a closable housing. The housing is illustrated in an opened position, wherein a cover 11a is in an OPEN position (illustrated by means of a double-headed arrow labeled "OPEN CLOSED").

The central switch device 10 comprises a closable housing 11 having a connection module 12 provided therein, to, or into, which connection module 12 connecting units 13 can be plugged and mounted adjacent to each other vertically and/or horizontally (as schematically illustrated in Fig. 1) and are provided to receive power and adapted to communicate with the connection module 12, as well as the IT-related equipment. The IT-related equipment can be connected by wire via Power over Ethernet connections (POE) labeled "POE" for instance by means of cables, or be part of an IOT environment, labeled "IOT" and can be connected wire-less.

The central switch device 10 further comprises an external network device 13a adapted to control and communicate with at least one external network 13b on a first communication port 13c for external primary communication. The external network device 13a can be of any conventional type providing communication with an external network 13b. The external network 13b may be the Internet, for instance. This is only very schematically illustrated in Fig. 1 and any intervening part of the external network 13b is not illustrated since it is well-known per se for the skilled person. The central switch device 10 further comprises a back-up communication 14 for back-up communication in case the external primary communication is not working, or need some back-up from yet another network. The back-up communication 14 can be adapted to communicate with a wireless network 14b, like 4G, for instance, communicating via a back-up communication port 14a. This is schematically illustrated only since it is well-known per se for the skilled person. The central switch device 10 further comprises an encryption module 15 coupled for transmitting data and configured to encrypt data received from, or transmitted to, the communication ports 13c, and possibly 14c. The data transmitted to the connection module 12 and the related connecting units 13 is thereby encrypted. Not all connecting units 13 but only particular connecting units 13 such as the IOT connection units 13 may necessarily be encrypted. Since the connecting units including the IOT units are encrypted the communication will be very secure compared to conventional switches, lacking encryption in particular on IOT communication.

The feature of the encryption module 15 is always up-dated by means of the user sub-scribing up-dating soft-ware to be sent from the external network 13b on regular basis. This can be provided by means of the user of the central switch device having made an agreement with an external provider. The agreement includes important features such as service, maintenance, and updating soft-ware.

In this way, measures are taken to increase safety such as always from a service providing updated safety soft-ware, and possibly hard-ware, on a regular basis. Also service and maintenance may be included in the subscription. This is a great advantage compared to prior art, which typically do not update on a regular basis from a central service provider. The user does not have to anything manually, but can rely on the service provider.

Communication within the central switch device 10 is provided by means of a communication link such as a data bus 18. The communication link 18 is adapted for communication between the first communication port 13a, the back-up communication unit 14, the back-up communication port 14a, the encryption unit 15, and a memory 19. This is schematically illustrated by double-headed arrows and the labeling "DATA BUS".

The central switch device 10 further comprises an electro-mechanical locking device 16 adapted to lock or unlock the housing 11, typically by closing, or respectively opening a non-transparent cover 11a, to (in the closed state) deny unauthorized or permit authorized access to the inside of the housing and therein located connecting units 13. Only part of the non-transparent cover 11a is shown in Fig. 1. The non-transparent cover can be hingedly (this is not illustrated in detail, but only schematically) connected to the housing, also being non-transparent 11.

Since the housing (and cover) are non-transparent, a content inside the housing when closed is always kept hidden for an intruder such that the intruder does not know what is inside without using force able to break the locking device or any other part of the cover. This is a great advantage compared to prior art open switches, where also by mistake, the wrong connection may be tampered with.

Typically, there is some mechanism reporting a possible intrusion to the service provider, such that documents are not hidden away or misused, for instance cable removed by mistake. A memory 19 can be provided for storing anything that needs to be stored persistently so that it is stored, typically automatically.

The central switch device 10 further comprises and a power back-up unit 17. The power back-up unit 17 can be duplicated and comprise a battery. This solves the problems with power failure; in particular for the IOT devices that have no own back-up powering and solve problems in case of re-start of the central switch device.

One or more of the connection units 13 also includes an IOT interface 13 which is operable for communicating with a plurality of IoT devices 13a. The central switch device 10 communicates across a first wired 13b external network for instance comprising fiber cables and/or a second wireless 14b external network such as a cellular network. The central switch device 10 is an intelligent device.

Each connection unit 13' may be an IOT connection module interface that may include a a configurable interface module which interfaces with the corresponding IOT devices 13'. Interfaces of the connection units 13 may communicate with the IOT devices 13' in order to retrieve data therefrom. In an exemplary arrangement, the interface, or a respective module, is programmed to obtain details from the IOT device 13' so that it can determine how to communicate with the IOT device. The respective interface modules are compatible with various communication protocols which allow the interface to be able to communicate with IOT devices having different communication protocols.

The device 10 has a central processor unit (CPU) 15 on board for processing data. The processor is programmed to implement the functionality of each module described above.

Referring now to FIG. 1, there is illustrated the primary hardware elements which are provided in the central switch device 10. Interfaces are built into the connection units 13. Example, of the interface may include serial, Ethernet, Wi-Fi, Bluetooth, Sub GHz frequency transceivers, 2.4 GHZ transceivers etc. The back-up device 14a can be cellular. or if network infrastructure is available it can be plugged into a wired platform, for example, an optical fiber network. The central processing unit 15 provides the processing capabilities on the device 10 and processes all of the instructions that the central switch device 10 is programmed to undertake. A memory disk 19 is provided for storing anything that needs to be stored persistently is stored. In the exemplary arrangement a database is stored on the disk 19 to survive rebooting of the central switch device 10. Memory 19 is where volatile information is stored. A cache of data can be stored here. The database is loaded into memory 19 for quick access by an operating system installed on the central switch device 10. The central switch device 10 may be provided on a cloud platform. If an organization has already invested in existing servers and systems it is envisaged that the central server could be provided as part of an on-premise solution deployed behind a firewall.

It will be understood that what has been described herein is an exemplary central switch device for connecting to IOT devices. While the present teaching has been described with reference to exemplary arrangements for connecting to IOT devices, it will be understood that it is not intended to limit the teaching to such arrangements as modifications can be made without departing from the spirit and scope of the present teaching.

It will be understood that while exemplary features of a central switch device in accordance with the present teaching have been described that such an arrangement is not to be construed as limiting the invention to such features. Some parts of the modules may be implemented in software, firmware, hardware, or a combination thereof

Generally, in terms of hardware architecture, such a central switch device will include, as will be well understood by the person skilled in the art, a processor(s), memory, and one or more input and/or output (I/O) devices. The processor(s) may be programmed to perform the functions of the modules as described above. The processor(s) is a hardware device for executing software, particularly software stored in memory. Processor(s) can be any custom made or commercially available processor, a central processing unit (CPU), an auxiliary processor among several processors associated with a computer, a semiconductor based microprocessor (in the form of a microchip or chip set), a microprocessor, or generally any device for executing software instructions.

The memory 19 is associated with processor(s) and can include any one or a combination of volatile memory elements (e.g., random access memory (RAM, such as DRAM, SRAM, SDRAM, etc.) and nonvolatile memory elements (e.g., ROM, hard drive, tape, CDROM, etc.). Moreover, the memory 19 may incorporate electronic, magnetic, optical, and/or other types of storage media. The memory 19 can have a distributed architecture where various components are situated remote from one another, but are still accessed by processor(s).

The software in the memory 19 may include one or more separate programs. The separate programs comprise ordered listings of executable instructions for implementing logical functions in order to implement the functions of the modules. In the example of heretofore described, the software in memory includes the one or more components of the method and is executable on a suitable operating system (O/S).

The present disclosure may include components provided as a source program, executable program (object code), script, or any other entity comprising a set of instructions to be performed. When a source program is included, the source program needs to be translated via a compiler, assembler, interpreter, or the like, which may or may not be included within the memory, so as to operate properly in connection with the O/S. Furthermore, a methodology implemented according to the teaching may be expressed as (a) an object oriented programming language, which has classes of data and methods, or (b) a procedural programming language, which has routines, subroutines, and/or functions, for example but not limited to, C, C++, Pascal, Basic, Fortran, Cobol, Perl, Java, and Ada.

When parts of the central device is implemented in software, it should be noted that such software can be stored on any computer readable medium for use by or in connection with any computer related system or method. In the context of this teaching, a computer readable medium is an electronic, magnetic, optical, or other physical device or means that can contain or store a computer program for use by or in connection with a computer related system or method. Such an arrangement can be embodied in any computer-readable medium for use by or in connection with an instruction execution system, apparatus, or device, such as a computer-based system, processor-containing system, or other system that can fetch the instructions from the instruction execution system, apparatus, or device and execute the instructions. In the context of this document, a "computer-readable medium" can be any means that can store, communicate, propagate, or transport the program for use by or in connection with the instruction execution system, apparatus, or device. The computer readable medium can be for example, but not limited to, an electronic, magnetic, optical, electromagnetic, infrared, or semiconductor system, apparatus, device, or propagation medium. Any process descriptions or blocks in the figures should be understood as representing modules, segments, or portions of code which include one or more executable instructions for implementing specific logical functions, as would be understood by those having ordinary skill in the art.

It should be emphasized that the above-described embodiments of the present teaching, are possible examples of implementations, merely set forth for a clear understanding of the principles. Many variations and modifications may be made to the above-described embodiment(s) without substantially departing from the spirit and principles of the present teaching. All such modifications are intended to be included herein within the scope of this disclosure and the present invention and protected by the following claims.

## Claims

1. A central switch device (10) adapted to connect in-house IT-related equipment to an external network, which central switch device (10) comprises a closable housing (11) having a connection module (12) provided therein, to which connection module (12) connecting units (13) can be plugged into and mounted adjacent to each other vertically and/or horizontally and are provided to receive power and adapted to communicate with the connection module panel (12), as well as the IT-related equipment (13a) such as internet-of-things devices, IOT, devices , which central switch device (10) further comprises an external network switch device (13a) adapted to control and communicate with at least one external network (13b) on a first communication port (13c) for external primary communication, **characterized in that** the central switch device (10) further comprises a back-up communication (14) for back-up communication, an encryption module (15) configured for encrypting data from the communication ports (13a, 13b); a mechanical locking device (16) for locking or unlocking the housing (11) to deny unauthorized or permit authorized access to the IT-related equipment (13a), and a power back-up unit (17).

2. The central switch device (10) according to claim 1, wherein the mechanical locking device is an electro-mechanical locking device (16) comprises means (16a) configured to detect tampering and/or unauthorized access.

3. The central switch device (10) according to claim 2, wherein the electro-mechanical locking device (16) comprises means (16a) configured to detect tampering and/or unauthorized access.

4. The central switch device (10) according to claim 2, wherein the mechanical locking device (16) is mechanical only.

5. The central switch device (10) according to any of the claims 1-4, wherein the power back-up unit (17) comprise two batteries.

6. The central switch device (10) according to any of the claims 1-3, wherein the housing (11) is non-transparent.

7. The central switch device (10) according to any of the claims 1-3, wherein a memory (19) is provided for storing anything that needs to be stored persistently is stored.
